# EUROPEAN PATENT SPECIFICATION

(11) **EP 4 415 918 B1**
(45) Date of publication and mention of the grant of the patent: **08.04.2026**
(21) Application number: 22793793.5
(22) Date of filing: 12.10.2022
(51) Int. Cl.: B23K 26/03, B23K 26/08, B23K 26/38, B23K 26/402, B26D 3/00, B26D 5/32, B26D 5/34, B23K 101/16, B23K 103/00

(54) **APPARATUSES FOR CUTTING A SHEET OF AEROSOL-GENERATING MATERIAL, CONSUMABLE WITH A SHEET OF AEROSOL-GENERATING MATERIAL, AND METHOD FOR CUTTING A SHEET OF AEROSOL-GENERATING MATERIAL**
VORRICHTUNGEN ZUM SCHNEIDEN EINER AEROSOLERZEUGUNGSMATERIALBAHN, VERBRAUCHSMATERIAL MIT EINER AEROSOLERZEUGUNGSMATERIALBAHN UND VERFAHREN ZUM SCHNEIDEN EINER AEROSOLERZEUGUNGSMATERIALBAHN
APPAREIL POUR COUPER UNE FEUILLE DE MATÉRIAU DE GÉNÉRATION D'AÉROSOL

(30) Priority: 12.10.2021 GB 202114604
(43) Date of publication of application: 21.08.2024
(73) Proprietor: Nicoventures Trading Limited, London WC2R 3LA (GB)
(72) Inventor: PARK, Scott, London WC2R 3LA (GB); FALLON, Gary, London WC2R 3LA (GB); FOSS-SMITH, Geoffrey, London WC2R 3LA (GB)
(74) Representative: Grey, Ian Michael
(86) International application number: PCT/GB2022/052576
(87) International publication number: WO 2023/062358

(56) References cited:
- WO-A1-2015/028568
- WO-A1-2019/106625
- US-A1- 2009 200 280

## Description

The present application relates to an apparatus for cutting a sheet of aerosol-generating material, to an apparatus for manufacturing a sheet of aerosol-generating material, to an apparatus and a method of cutting a sheet of aerosol-generating material, and to a method of manufacturing an aerosol-generating consumable from a sheet of aerosol-generating material, see claims 1, 4, 6, 12 and 13.

### Background

Certain tobacco industry products produce an aerosol during use, which is inhaled by a consumer. For example, tobacco-heating devices heat an aerosol-generating material such as tobacco to form an aerosol by heating, but not burning, the aerosol-generating material. During manufacture, a sheet or web of aerosol-generating material is unwound from a bobbin and fed into a consumable forming unit which gathers the sheet or web into a rod, wraps the rod in a wrapper and cuts the rod into rod sections each of which form an individual consumable. The sheet may be cut into strips or strands prior to being gathered into a rod.

US 2009/200280 A1 (describing the preamble of claims 1 and 14) shows a continuous strip of material advancing along a given feed direction shaped by a device that comprises a rotating drum, around which the strip is looped at least in part, and a laser cutting head. The laser head operates from the side of the strip opposite to the drum, which is furnished internally with a first pressurized chamber able to generate an extracting or blowing action on smoke produced by the laser cutting process, and a second chamber adjacent to the first, by which scrap material cut from the strip is detached and retained on the drum. Smoke produced by the laser cut is distanced from the strip almost instantaneously by a blower located between the cutting head and the drum, and thus prevented from condensing and hardening on the cut edge of the strip.

### Summary

According to a first aspect of the present invention, an apparatus for cutting a sheet of aerosol-generating material is defined in claim 1, the apparatus comprising a laser generator configured such that a laser emitted by the laser generator cuts the sheet as the sheet of aerosol-generating material is conveyed along a conveyance path; and a control unit configured to control the laser generator, wherein the control unit is configured to control the laser generator to intermittently pre-cut the sheet of aerosol-generating material to form discrete cut sections spaced from each other in a direction extending along the conveyance path, and wherein the control unit is configured to control the laser generator to additionally cut the sheet to form continuous strips from the discrete cut sections.

Each discrete cut section may comprise a plurality of parallel, elongate strips of aerosol-generating material extending in a direction along the conveyance path.

The control unit may be configured to control the laser generator to form a registration mark in the sheet of aerosol-generating material.

According to a second aspect of the present invention, an apparatus for manufacturing a sheet of aerosol-generating material is defined in claim 4, the apparatus comprising apparatus for cutting a sheet of aerosol-generating material according to the first aspect of the invention.

The apparatus may comprise a sheet of aerosol-generating material manufacturing unit and, a winding unit for winding the manufactured sheet onto a bobbin. The apparatus for cutting a sheet of aerosol generating material may be configured to cut the sheet prior to winding of the sheet onto a bobbin using the winding unit.

According to a third aspect of the present invention, an apparatus for manufacturing an aerosol-generating consumable from a sheet of aerosol-generating material is defined in claim 6, the apparatus comprising:
an apparatus for cutting a sheet of aerosol-generating material according to the invention;
a conveyor to convey the sheet of aerosol-generating material along a conveyance path, and
a consumable forming unit to receive the cut sheet of aerosol-generating material as it is conveyed along the conveyance path and form it into a rod-like shape.

The control unit may be configured to control the laser generator to form a registration mark in the sheet.

The apparatus may comprise a scanner configured to read a registration mark and send a signal indicative of the presence of a registration mark to the control unit.

The control unit may be configured to control the consumable forming unit in dependence on said signal.

The consumable forming unit may comprise a garniture to wrap the sheet formed into a rod-like shape in a wrapper to form a wrapped rod, and a cutter to cut the wrapped rod into discrete rod sections.

The control unit may be configured to control the cutter that cuts the wrapped rod into discrete rod sections in dependence on said signal indicative of the presence of a registration mark.

According to a fourth aspect of the present invention, a method of cutting a sheet of aerosol-generating material is defined in claim 12, the method comprising:
conveying a sheet of aerosol-generating material along a conveyance path,
making cuts in the sheet using a laser emitted by a laser generator as the sheet is conveyed along the conveyance path, and
controlling the laser with a control unit to intermittently pre-cut the sheet of aerosol-generating material to from discrete cut sections spaced from each other in a direction extending along the conveyance path and to additionally cut the web to form continuous strips from the discrete cut sections.

According to a fifth aspect of the present invention, a method of manufacturing an aerosol-generating consumable from a sheet of aerosol-generating material is defined in claim 13, the method comprising:
applying a method of cutting a sheet of aerosol-generating material according to the invention, and
forming the cut sheet into a consumable in a consumable forming unit.

### Brief Description of the Drawings

Embodiments will now be described, by way of example only, with reference to the accompanying drawings, in which:
Figure 1 is a schematic drawing of an embodiment of an apparatus for manufacturing a a consumable;
Figure 2 is a schematic drawing of an embodiment of an apparatus for manufacturing a consumable;
Figure 3 is a schematic drawing of an embodiment of an apparatus for manufacturing a consumable;
Figures 4A to 4C are different representations of a sheet of aerosol-generating material which have been cut using the apparatus of Figure 1, 2 or 3, and prior to being formed into a consumable;
Figure 5 shows an aerosol provision device in which a consumable is received, and
Figure 6 is a flow diagram to illustrate a method of manufacturing a consumable for an aerosol provision device.

### Detailed Description

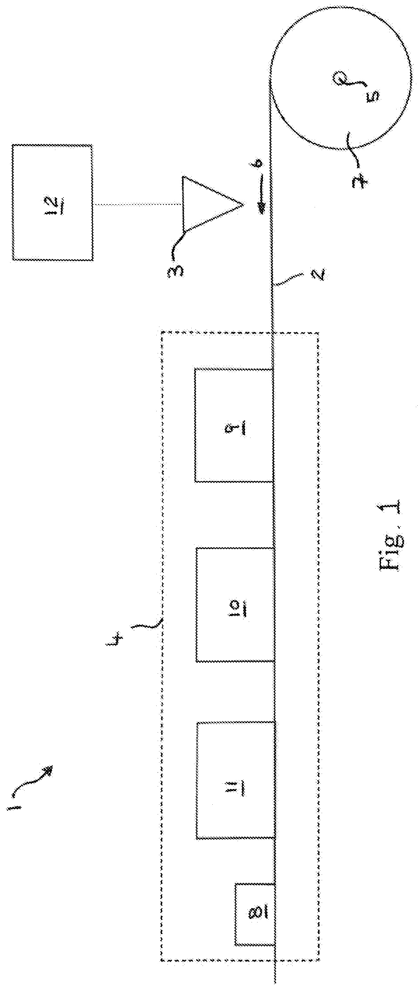

Figure 1 is a schematic drawing of an embodiment of an apparatus 1 for manufacturing an aerosol-generating consumable from a sheet of aerosol-generating material 2. The manufacturing apparatus 1 includes cutting apparatus 3 for cutting the sheet of aerosol-generating material 2, prior to conveyance of the sheet of aerosol-generating material 2 into a consumable forming unit 4 of the manufacturing apparatus 1.

In each embodiment of the invention, the sheet of aerosol-generating material 2 is a tobacco material, for example, a reconstituted tobacco material that is formed into a continuous web or sheet. However, it should be recognised that the aerosol-generating material 2 may alternatively be a non-tobacco based material.

The manufacturing apparatus 1 comprises a feeding apparatus 5 which mounts a spool or bobbin 7 of aerosol-generating material. The feeding apparatus 5 is configured to supply the sheet 2 of aerosol-generating material as a continuous sheet along a conveyance path 6. The sheet 2 may be fed along the conveyance path 6 by any suitable mechanism, for example, a drive belt or a plurality of rollers (not shown), at least one of which is driven.

The consumable forming unit 4 of the manufacturing apparatus 1 is configured to receive the sheet 2 of aerosol-generating material as it is conveyed along the conveyance path 6. The consumable forming unit 4 is configured to form the sheet 2 into a consumable 8. In the present example, the consumable forming unit 4 is configured to gather or otherwise form the sheet 2 of aerosol-generating material into an elongate, continuous rod in rod-forming unit 9, and to wrap the continuous rod in wrapping materal in a wrapping unit 10 before subsequently cutting the elongate wrapped rod in a rod cutter 11, into discrete rod sections 8, each of which may form an individual consumable 8, as shown in Figure 1.

In some consumables, the sheet 2 is in the form of strips or strands that extend in a longitudinal direction along the length of the consumable 8 and in a direction that extends along the conveyance path 6 during manufacture. To enable this construction, it is known to cut the sheet 2 into a plurality of longitudinal strips or strands, which may be in the order of 1mm wide, using a cutting cylinder incorporating cutting blades which act on the sheet 2 and cut it prior to entry of the cut sheet into the consumable forming unit 4 that gathers and forms the strips into a rod and which wraps the rod in a wrapping material.

A problem with the aforementioned cutting technique is that a substantial amount of tobacco dust is produced. The dust coats or sticks to both the strands and the apparatus. Often, this problem is mitigated by providing a dust extraction system to either vaccum, or blow, the dust off the strands and the apparatus. However, this adds additional complexity to the apparatus and some dust will still remain. The dust may also be blown into the local area surrounding the apparatus. Another concern is that cutting blades provide a less than precise cut and, due to a lack of uniformity in the thickness of the sheet, can result in the snapping of individual strands.

To alleviate or substantially overcome the aforementioned problems, the sheet 2 is cut into strips using a laser generator 3, which can provide a more precise and much cleaner cut, thereby avoiding or minimising dust. The likelihood of individual strands snapping or breaking is also prevented or reduced, as the strands maintain a greater tensile strength when cut by a laser emitted by a laser generator 3.

In an embodiment, the laser generator 3 is positioned above the aerosol-generating sheet 2 between the feeding apparatus 5 and the consumable forming unit 4 such that a laser emitted by the laser generator 3 will cut the sheet 2 of aerosol-generating material as it is conveyed along the conveyance path 6 and before it reaches the consumable forming unit 4. The laser generator 3 may be positioned so that the sheet 2 is cut into strands immediately after it is unwound from the bobbin 7 mounted on the feeding apparatus 5. Alternatively, the sheet 2 may be cut further downstream, i.e. just prior to entry into the consumable forming unit 4. A suitable laser generator is manufactured by Micro Laser Tech^{®} 2 x 400W, model MLS-G 2-800 or MPS- M 4 - 800..

The sheet 2 is cut into strands on-line, i.e. as the sheet 2 is unwound from the bobbin 7 and fed into the consumable forming unit 4 of a consumable manufacturing apparatus 1. However, it will be appreciated that the sheet 2 could also be pre-cut, i.e. the cuts in the sheet 2 could be formed as an integral part of the sheet manufacturing process. In this case, the manufactured sheet 2 is cut immediately after manufacture and before it is wound onto a bobbin 7 which is then subsequently mounted to the feeding unit 5 of the apparatus 1 for manufacturing the consumable. The sheet 2 is therefore wound onto the bobbin 7 in its cut form and the cutting apparatus comprising a laser generator 3 according to an embodiment of the invention can be located between the sheet manufacturing apparatus 1 and apparatus that winds the sheet onto a bobbin 7.

The sheet 2 may also be cut in an independent process on a dedicated cutting machine. For example, an uncut sheet 2, which has been wound onto a spool 7 following manufacture, may subsequently be mounted to a cutting machine which unwinds the sheet from the spool 7, cuts it using a laser generator, before winding the cut sheet 2 back onto another spool 7. The laser generator 3 for cutting the sheet 2 may be mounted so that a laser generator cuts that portion of the sheet 2 which is between the two spools 7.

It will also be understood that, in an alternate embodiment, the feeding apparatus 5 can supply individual sheets of aerosol-generating material 2 along the conveyance path 6, with the laser generator 3 positioned so as to make cuts in each sheet, rather than in a continuous length of aerosol-generating material unwound from a bobbin 7.

The rod-forming unit 9 of the consumable forming unit 4 is configured to gather the sheet 2 of aerosol-generating material cut by the laser generator 3 and form them into a rod-like shape, which may have a generally circular shaped cross-section, although other cross-sectional shapes are envisaged. The rod-forming unit 9 may comprise a funnel or cone (not shown) that is configured to gather the strips together such that the strips exit the funnel or cone as a rod.

The wrapping unit 10 is downstream of the rod-forming unit 9, and is configured to wrap the gathered strips of aerosol-generating material in a wrapper. The wrapping unit may comprise a garniture (not shown) that is configured to receive the rod of gathered strips and wrap the strips in the wrapper. The wrapper may be fed as a continuous web through the garniture on a garniture belt (not shown) that is configured to wrap around the rod of strips as the belt, wrapper and strips pass through a narrowing cone or tongue of the garniture. The wrapper may then be secured in position using adhesive that is applied or pre-applied to an edge of the wrapper.

The consumable forming apparatus 4 also comprises a rod cutter 11 located downstream of the wrapping unit 10. The rod cutter 11 is configured to cut the continuous wrapped rod into discrete rods 8 of aerosol-generating material. The discrete rods 8 produced by the rod cutter 11 may be single-length or double-length rods, or longer.

The laser generator 3 can have an array of laser generating heads mounted in a fixed position to simultaneously cut the sheet 2 into a plurality of strips as the sheet 2 is conveyed along the conveyance path 6 such that the strips extend in a direction along the conveyance path 6. However, one or more of the laser generating heads may be movable so as to scan across the sheet 2. It is envisaged that the sheet 2 will continue to move along the conveyance path 6. However, it is also possible for the sheet 2 to move intermittently so that it is held stationary whilst being cut by the laser generator 3.

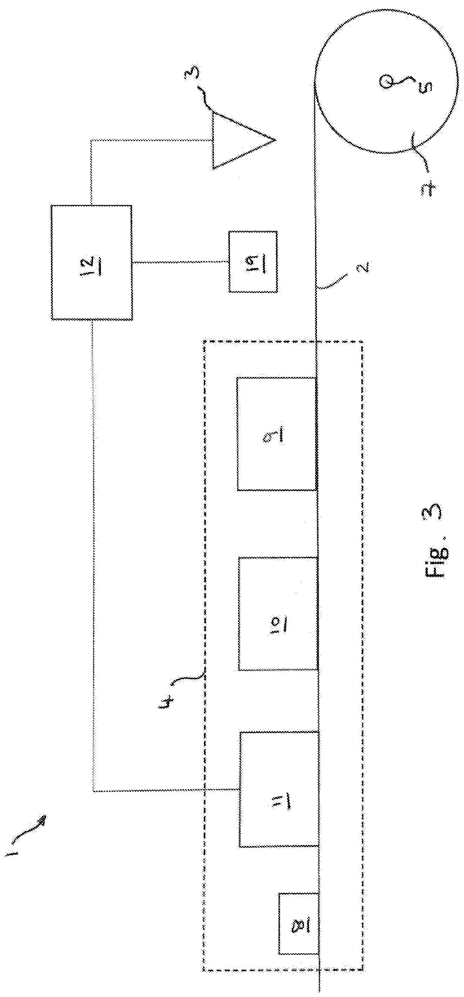

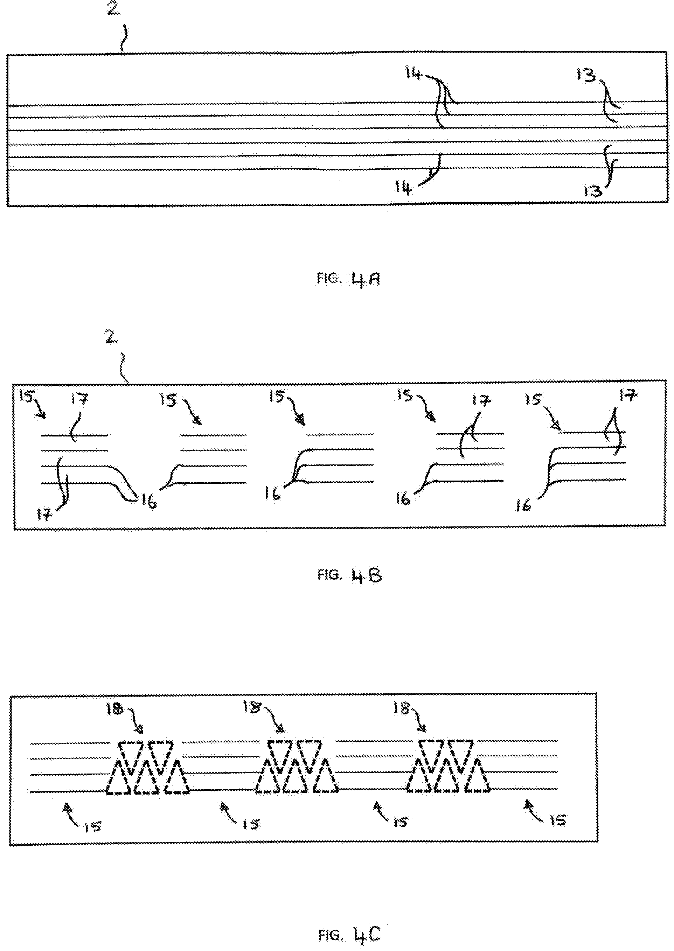

The apparatus 1 includes a control unit 12 operable to control activation of the laser generator 3. In some example embodiments, such as that shown in Figure 1, the control unit 12 may control the laser generator 3 such that the laser generator 3 remains active in order to cut the sheet 2 continuously as the sheet 2 moves along the conveyance path 6. Figure 4A illustrates a plan view of a portion of a sheet 2 of aerosol-generating material which has been cut into a series of continuous, longitudinally extending parallel strips 13 by the laser generator 3 of Figure 1. In the drawing of Figure 3A, six cuts 14 have been made in the sheet to form five strips 13. However, it will be understood that the sheet 2 may be cut into any number of strips 13, and that it may be cut into strips 13 across the full width of the sheet 2. In a modified embodiment, the control unit 12 may be omitted altogether and the laser generator 3 may be manually controlled, i.e. via an on/off switch, or it may operate in conjunction with operation of the feeding unit 5.

As shown in the plan view of a portion of a sheet of aerosol-generating material 2 of Figure 4B, the control unit 12 continuously activates and deactivates the laser generator 3 of Figure 1 as the sheet 2 continues to travel along the conveyance path 6, such that the sheet 2 is cut intermittently to form discrete cut sections 15 spaced from each other in a direction extending along the conveyance path 6. In Figure 4B, each discrete cut section 15 comprises four spaced, parallel, cuts 16 to form three strips 17. As with Figure 4A, each discrete cut section 15 may comprise any number of cuts 16 adjacent to each other and extending across the width of the sheet 2. A sheet 2 provided with discrete cut sections 15, such as those shown in Figure 4B, may be preferred if the sheet 2 is to be cut prior to it being wound onto a bobbin 7, as the intermittent cut sections 15 provide additional strength and maintain the overall integrity of the sheet 2 and make it easier to unwind when the bobbin 7 is mounted on the consumable manufacturing apparatus 1. If the sheet is pre-cut with discrete cut sections 15, the laser generator 3 may also be used to cut a registration mark 18 in the sheet 2 between or adjacent to the discrete cut sections 15, as shown in the plan view showing a portion of a sheet of aerosol-generating material 2 of Figure 4C.

When the sheet 2 is subsequently unwound and fed along the conveyance path 6 into the consumable forming unit 4, additional cuts are made in the web to form continuous longitudinal strips 13, so the sheet 2 appears as it does in Figure 4A. These additional cuts are made using a laser generator 3.

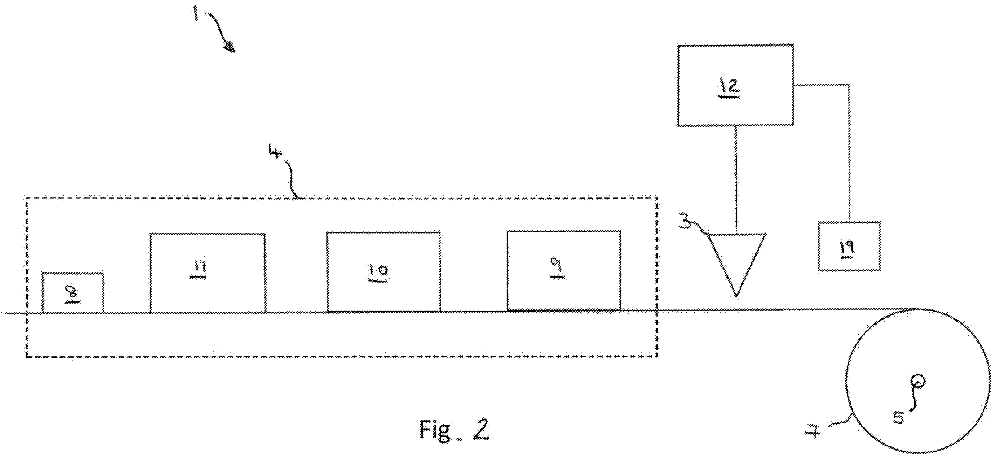

Operation of the laser generator 3 may be controlled in response to a signal received from a scanner 19 (see Figure 2) located upstream of the cutter and which reads the registration mark 18 on the sheet 2 and operates the cutter 3 to complete the cuts between the discrete cut sections 15.

The registration mark 18 may be a pattern or image that can be read by the scanner 19 on the manufacturing apparatus 1, and which is capable of sending a signal to control the cutter 3 to complete any cuts between the discrete cut sections 15 of the sheet 2 before the sheet 2 enters the consumable forming unit 4. The registration mark 18 may be formed using the laser 3 at reduced intensity so as not to penetrate all the way through the sheet 2, and/or used intermittently so as to form a series of perforations in the sheet 2.

In Figure 4C, the registration mark 18 is located between the discrete cut sections 15 and comprises a series of interlocking triangles, but the registration mark 18 can be formed from any individual shape or combination of shapes. The registration mark 18 can also be positioned elsewhere, i.e. adjacent to the discrete cut sections 15 or offset to one side of the region between the discrete cut sections 15.

As the sheet 2 travels along the conveyance path 6, the scanner 19 reads or recognises the registration mark 18 and sends a signal to the control unit 12 which then activates and deactivates a cutter, whether that be a laser generator 3 or a conventional cutting unit, to complete the cuts between the discrete cut sections 15 to form a plurality of continuous longitudinally extending strips, as shown in Figure 3A, before said strips enter the consumable forming unit 4.

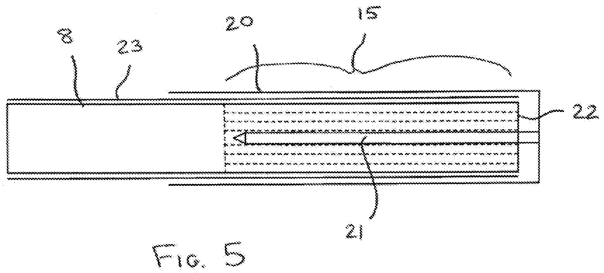

In another embodiment not covered by the present invention, the discrete cut sections 15 and registration mark 18 may be cut into the sheet 2 using the laser generator 3, as shown in Figure 3, and there may be no further cutting of the sheet 2 between the discrete cut sections 15 prior to entry of the sheet 2 into the rod forming unit 9. The control unit 12 may instead be configured to control the rod cutter 11 that cuts the rod into discrete rods sections 8, in dependence on the signal received from the scanner 19 that reads the registration mark 18. In particular, the rod cutter 11 may be controlled so that the rod is cut into discrete rod sections 8 so that a discrete cut section 15 extending from one end of each discrete rod section 8, and which forms a distal end of the consumable, i.e. the end of the consumable, opposite to a mouth end, which is inserted into an aerosol-generating device 20 (see Figure 5) for heating the aerosol-generating material of the consumable during use.

If the aerosol-generating sheet 2 is pre-cut with the discrete cut sections 15 and the registration mark 18, then the laser generator 3 in an embodiment not covered by the present invention, may be omitted altogether from the embodiment shown in Figure 3. The scanner 19 then recognises the registration mark 19 and the control unit 12 controls the rod cutter 11 as described in the previous paragraph.

If the aerosol-generating device 20 (see Figure 5) into which the consumable 8 is inserted has a heating element 21 in the form of a pin or blade that is inserted into the distal end 22 of the consumable 8, the discrete cut section 15 extending from that end of the consumable 8 may facilitate the insertion of the heating element 21. The discrete cut section 15 may be the same length as the heating element 21 which is to be inserted to it. Alternatively, each discrete cut section 15 may be shorter or longer than the length of the heating element 21.

In the above embodiments, the scanner 19 may be arranged perpendicular to the conveyance path 4 or at an angle to the conveyance path 4 above the sheet of aerosol-generating material 2. The scanner 19 may comprise a camera. Any suitable model of camera can be used, for example, the Keyence (TM) CA-HL02MX camera. A camera is configured to image the sheet 2 of aerosol-generating material as it passes along the conveyance path 4 and to detect the presence of a registration mark 18.

With further reference to Figure 5, the aerosol-generating device 20 is a non-combustible aerosol-generating device 20. An aerosol-generating system comprises a consumable 8 according to embodiments of the invention together with the aerosol-generating device 20. As represented by the dashed lines in Figure 5, the aerosol-generating material 2 gathered into a rod and wrapped in wrapping material 23 has a discrete cut section 15 extending from the end of the consumable 8 that is inserted into the aerosol-generating device 20, such that the heater element 21 within the device 20 is received in the aerosol-generating material formed by the discrete cut section 15.

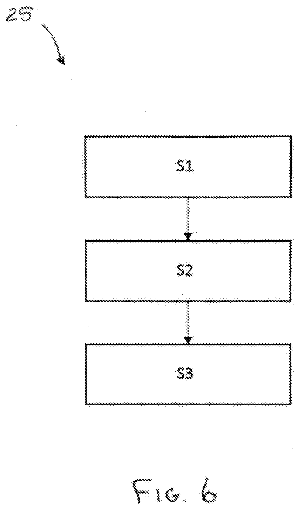

Referring now to Figure 6, a flowchart to illustrate a method 25 of manufacturing a consumable 8 for an aerosol-provision device 20 is illustrated. The method 25 comprises feeding a sheet of aerosol-generating material 2 along a conveyance path (step S1); cutting the sheet of aerosol-generating material 2 using a laser emitted by a laser generator 3 as the aerosol-generating sheet 2 is conveyed along the conveyance path (step S2), and forming the cut sheet 2 into a consumable 8 in a consumable forming unit 4 (step S3).

The step (step S2) of cutting the sheet of aerosol-generating material 2 using a laser generator 3 comprises cutting it to form discrete cut sections 15 spaced from each other in a direction extending along the conveyance path 6, and so that each discrete cut section 15 comprises a plurality of parallel, elongate strips of aerosol-generating material 2.

The step of forming the cut sheet into a consumable 8 in a consumable forming unit 4 (step S3) may comprise forming the sheet 2 into a rod, wrapping the rod with a wrapping material and cutting the rod into discrete cut rods with a rod cutter 11.

The step of forming the cut sheet into a consumable 8 in the consumable forming unit 4 (step S3) may also comprise cutting the rod into discrete rods 8 using the rod cutter 11 such that a discrete cut section 15 extends from an end of each rod.

According to the present invention, an "aerosol-generating device", and aerosol-generating system" refer to a non-combustible aerosol provision device, and a non-combustible aerosol-generating system, respectively.

According to the present invention, a "non-combustible" aerosol provision device or system is one where a constituent aerosol-generating material of the aerosol provision system (or component thereof) is not combusted or burned in order to facilitate delivery of at least one substance to a user.

The non-combustible aerosol provision system is an electronic cigarette, also known as a vaping device or electronic nicotine delivery system (END), although it is noted that the presence of nicotine in the aerosol-generating material is not a requirement.

The non-combustible aerosol provision system is an aerosol-generating material heating system, also known as a heat-not-burn system. An example of such a system is a tobacco heating system.

The non-combustible aerosol provision system is a hybrid system to generate aerosol using a combination of aerosol-generating materials, one or a plurality of which may be heated. Each of the aerosol-generating materials may or may not contain nicotine. The aerosol-generating material may comprise, for example, tobacco or a non-tobacco product.

The non-combustible aerosol provision device may comprise a power source and a controller. The power source may, for example, be an electric power source or an exothermic power source. In some embodiments, the exothermic power source comprises a carbon substrate which may be energised so as to distribute power in the form of heat to an aerosol-generating material or to a heat transfer material in proximity to the exothermic power source.

The non-combustible aerosol provision device may comprise an area for receiving the consumable, an aerosol generator, an aerosol generation area, a housing, a mouthpiece, a filter and/or an aerosol-modifying agent.

The consumable 8 for use with the non-combustible aerosol provision device may comprise, in addition to aerosol-generating material, an aerosol-generating material storage area, an aerosol-generating material transfer component, an aerosol generator, an aerosol generation area, a housing, a wrapper, a filter, a mouthpiece, and/or an aerosol-modifying agent.

The substance to be delivered may be an aerosol-generating material or a material that is not intended to be aerosolised. As appropriate, either material may comprise one or more active constituents, one or more flavours, one or more aerosol-former materials, and/or one or more other functional materials.

The substance to be delivered comprises an active substance. The active substance as used herein may be a physiologically active material, which is a material intended to achieve or enhance a physiological response. The active substance may for example be selected from nutraceuticals, nootropics, psychoactives. The active substance may be naturally occurring or synthetically obtained. The active substance may comprise for example nicotine, caffeine, taurine, theine, vitamins such as B6 or B12 or C, melatonin, cannabinoids, or constituents, derivatives, or combinations thereof. The active substance may comprise one or more constituents, derivatives or extracts of tobacco, cannabis or another botanical.

The active substance comprises nicotine, caffeine, melatonin or vitamin B12. As noted herein, the active substance may comprise one or more constituents, derivatives or extracts of cannabis, such as one or more cannabinoids or terpenes. As noted herein, the active substance may comprise or be derived from one or more botanicals or constituents, derivatives or extracts thereof. As used herein, the term "botanical" includes any material derived from plants including, but not limited to, extracts, leaves, bark, fibres, stems, roots, seeds, flowers, fruits, pollen, husk, shells or the like. Alternatively, the material may comprise an active compound naturally existing in a botanical, obtained synthetically. The material may be in the form of liquid, gas, solid, powder, dust, crushed particles, granules, pellets, shreds, strips, sheets, or the like. Example botanicals are tobacco, eucalyptus, star anise, hemp, cocoa, cannabis, fennel, lemongrass, peppermint, spearmint, rooibos, chamomile, flax, ginger, ginkgo biloba, hazel, hibiscus, laurel, licorice (liquorice), matcha, mate, orange skin, papaya, rose, sage, tea such as green tea or black tea, thyme, clove, cinnamon, coffee, aniseed (anise), basil, bay leaves, cardamom, coriander, cumin, nutmeg, oregano, paprika, rosemary, saffron, lavender, lemon peel, mint, juniper, elderflower, vanilla, wintergreen, beefsteak plant, curcuma, turmeric, sandalwood, cilantro, bergamot, orange blossom, myrtle, cassis, valerian, pimento, mace, damien, marjoram, olive, lemon balm, lemon basil, chive, carvi, verbena, tarragon, geranium, mulberry, ginseng, theanine, theacrine, maca, ashwagandha, damiana, guarana, chlorophyll, baobab or any combination thereof. The mint may be chosen from the following mint varieties: Mentha Arventis, Mentha c.v.,Mentha niliaca, Mentha piperita, Mentha piperita citrata c.v.,Mentha piperita c.v, Mentha spicata crispa, Mentha cardifolia, Memtha longifolia, Mentha suaveolens variegata, Mentha pulegium, Mentha spicata c.v. and Mentha suaveolens

The active substance comprises or is derived from one or more botanicals or constituents, derivatives or extracts thereof and the botanical is tobacco.

The active substance comprises or derived from one or more botanicals or constituents, derivatives or extracts thereof and the botanical is selected from eucalyptus, star anise, cocoa and hemp.

The active substance comprises or derived from one or more botanicals or constituents, derivatives or extracts thereof and the botanical is selected from rooibos and fennel.

The substance to be delivered comprises a flavour. As used herein, the terms "flavour" and "flavourant" refer to materials which, where local regulations permit, may be used to create a desired taste, aroma or other somatosensorial sensation in a product for adult consumers. They may include naturally occurring flavour materials, botanicals, extracts of botanicals, synthetically obtained materials, or combinations thereof (e.g., tobacco, cannabis, licorice (liquorice), hydrangea, eugenol, Japanese white bark magnolia leaf, chamomile, fenugreek, clove, maple, matcha, menthol, Japanese mint, aniseed (anise), cinnamon, turmeric, Indian spices, Asian spices, herb, wintergreen, cherry, berry, red berry, cranberry, peach, apple, orange, mango, clementine, lemon, lime, tropical fruit, papaya, rhubarb, grape, durian, dragon fruit, cucumber, blueberry, mulberry, citrus fruits, Drambuie, bourbon, scotch, whiskey, gin, tequila, rum, spearmint, peppermint, lavender, aloe vera, cardamom, celery, cascarilla, nutmeg, sandalwood, bergamot, geranium, khat, naswar, betel, shisha, pine, honey essence, rose oil, vanilla, lemon oil, orange oil, orange blossom, cherry blossom, cassia, caraway, cognac, jasmine, ylang-ylang, sage, fennel, wasabi, piment, ginger, coriander, coffee, hemp, a mint oil from any species of the genus Mentha, eucalyptus, star anise, cocoa, lemongrass, rooibos, flax, ginkgo biloba, hazel, hibiscus, laurel, mate, orange skin, rose, tea such as green tea or black tea, thyme, juniper, elderflower, basil, bay leaves, cumin, oregano, paprika, rosemary, saffron, lemon peel, mint, beefsteak plant, curcuma, cilantro, myrtle, cassis, valerian, pimento, mace, damien, marjoram, olive, lemon balm, lemon basil, chive, carvi, verbena, tarragon, limonene, thymol, camphene), flavour enhancers, bitterness receptor site blockers, sensorial receptor site activators or stimulators, sugars and/or sugar substitutes (e.g., sucralose, acesulfame potassium, aspartame, saccharine, cyclamates, lactose, sucrose, glucose, fructose, sorbitol, or mannitol), and other additives such as charcoal, chlorophyll, minerals, botanicals, or breath freshening agents. They may be imitation, synthetic or natural ingredients or blends thereof. They may be in any suitable form, for example, liquid such as an oil, solid such as a powder, or gas.

The flavour comprises menthol, spearmint and/or peppermint. In some embodiments, the flavour comprises flavour components of cucumber, blueberry, citrus fruits and/or redberry. In some embodiments, the flavour comprises eugenol. In some embodiments, the flavour comprises flavour components extracted from tobacco. In some embodiments, the flavour comprises flavour components extracted from cannabis.

The flavour may comprise a sensate, which is intended to achieve a somatosensorial sensation which are usually chemically induced and perceived by the stimulation of the fifth cranial nerve (trigeminal nerve), in addition to or in place of aroma or taste nerves, and these may include agents providing heating, cooling, tingling, numbing effect. A suitable heat effect agent may be, but is not limited to, vanillyl ethyl ether and a suitable cooling agent may be, but not limited to eucolyptol, WS-3.

Aerosol-generating material is a material that is capable of generating aerosol, for example when heated, irradiated or energized in any other way. Aerosol-generating material may, for example, contain an active substance and/or flavourants. In some embodiments, the aerosol-generating material may comprise an "amorphous solid", which may alternatively be referred to as a "monolithic solid" (i.e. non-fibrous). In some embodiments, the amorphous solid may be a dried gel. The amorphous solid is a solid material that may retain some fluid, such as liquid, within it. In some embodiments, the aerosol-generating material may for example comprise from about 50wt%, 60wt% or 70wt% of amorphous solid, to about 90wt%, 95wt% or 100wt% of amorphous solid.

The aerosol-generating material 2 may be a laminate of 2 or more layers. One layer may be a gel layer and can include or be formed from a substance or flavourant such as menthol. The laminate may be formed as part of the bandcast process such that the laminate is wound onto a bobbin.

The aerosol-generating material may comprise one or more active substances and/or flavours, one or more aerosol-former materials, and optionally one or more other functional material.

The aerosol-former material may comprise one or more constituents capable of forming an aerosol. In some embodiments, the aerosol-former material may comprise one or more of glycerine, glycerol, propylene glycol, diethylene glycol, triethylene glycol, tetraethylene glycol, 1,3-butylene glycol, erythritol, meso-Erythritol, ethyl vanillate, ethyl laurate, a diethyl suberate, triethyl citrate, triacetin, a diacetin mixture, benzyl benzoate, benzyl phenyl acetate, tributyrin, lauryl acetate, lauric acid, myristic acid, and propylene carbonate.

The one or more other functional materials may comprise one or more of pH regulators, colouring agents, preservatives, binders, fillers, stabilizers, and/or antioxidants.

A consumable is an article comprising or consisting of aerosol-generating material, part or all of which is intended to be consumed during use by a user. A consumable may comprise one or more other components, such as an aerosol-generating material storage area, an aerosol-generating material transfer component, an aerosol generation area, a housing, a wrapper, a mouthpiece, a filter and/or an aerosol-modifying agent. A consumable may also comprise an aerosol generator, such as a heater, that emits heat to cause the aerosol-generating material to generate aerosol in use. The heater may, for example, comprise combustible material, a material heatable by electrical conduction, or a susceptor.

A susceptor is a material that is heatable by penetration with a varying magnetic field, such as an alternating magnetic field. The susceptor may be an electrically-conductive material, so that penetration thereof with a varying magnetic field causes induction heating of the heating material. The heating material may be magnetic material, so that penetration thereof with a varying magnetic field causes magnetic hysteresis heating of the heating material. The susceptor may be both electrically-conductive and magnetic, so that the susceptor is heatable by both heating mechanisms. The device that is configured to generate the varying magnetic field is referred to as a magnetic field generator, herein.

An aerosol-modifying agent is a substance, typically located downstream of the aerosol generation area, that is configured to modify the aerosol generated, for example by changing the taste, flavour, acidity or another characteristic of the aerosol. The aerosol-modifying agent may be provided in an aerosol-modifying agent release component that is operable to selectively release the aerosol-modifying agent The aerosol-modifying agent may, for example, be an additive or a sorbent. The aerosol-modifying agent may, for example, comprise one or more of a flavourant, a colourant, water, and a carbon adsorbent. The aerosol-modifying agent may, for example, be a solid, a liquid, or a gel. The aerosol-modifying agent may be in powder, thread or granule form. The aerosol-modifying agent may be free from filtration material.

An aerosol generator is an apparatus configured to cause aerosol to be generated from the aerosol-generating material. In some embodiments, the aerosol generator is a heater configured to subject the aerosol-generating material to heat energy, so as to release one or more volatiles from the aerosol-generating material to form an aerosol. In some embodiments, the aerosol generator is configured to cause an aerosol to be generated from the aerosol-generating material without heating. For example, the aerosol generator may be configured to subject the aerosol-generating material to one or more of vibration, increased pressure, or electrostatic energy.

The various embodiments described herein are presented only to assist in understanding and teaching the claimed features. These embodiments are provided as a representative sample of embodiments only, and are not exhaustive and/or exclusive. It is to be understood that advantages, embodiments, examples, functions, features, structures, and/or other aspects described herein are not to be considered limitations on the scope of the invention which is defined by the appended claims.

## Claims

1. Apparatus for cutting a sheet of aerosol-generating material comprising:
a laser generator (3) configured such that a laser emitted by the laser generator (3) cuts the sheet (2) as the sheet (2) of aerosol-generating material is conveyed along a conveyance path (6);
the apparatus being **characterised by**:
a control unit (12) configured to control the laser generator (3), wherein the control unit (12) is configured to control the laser generator (3) to intermittently pre-cut the sheet (2) of aerosol-generating material to form discrete cut sections (15) spaced from each other in a direction extending along the conveyance path (6), and wherein the control unit (12) is configured to control the laser generator (3) to additionally cut the sheet (2) to form continuous strips (13) from the discrete cut sections (15).

2. Apparatus according to claim 1, wherein each discrete cut section (15) comprises a plurality of parallel, elongate strips (17) of aerosol-generating material extending in a direction along the conveyance path (6).

3. Apparatus according to claim 1 or 2, wherein the control unit (12) is configured to control the laser generator (3) to form a registration mark (18) in the sheet (2) of aerosol-generating material.

4. Apparatus for manufacturing a sheet of aerosol-generating material comprising apparatus (3) for cutting a sheet (2) of aerosol-generating material according to any preceding claim.

5. Apparatus according to claim 4, comprising a sheet of aerosol-generating material manufacturing unit and, a winding unit for winding the manufactured sheet onto a bobbin (7), the apparatus (3) for cutting a sheet (2) of aerosol generating material being configured to cut the sheet (2) prior to winding of the sheet (2) onto a bobbin (7) using the winding unit.

6. Apparatus for manufacturing an aerosol-generating consumable from a sheet of aerosol-generating material, the apparatus comprising:
an apparatus (3) for cutting a sheet (2) of aerosol-generating material according to any of claims 1 to 3;
a conveyor to convey the sheet (2) of aerosol-generating material along a conveyance path (6), and
a consumable forming unit (4) to receive the cut sheet (2) of aerosol-generating material as it is conveyed along the conveyance path (6) and form it into a rod-like shape.

7. Apparatus according to claim 6, wherein the control unit (12) is configured to control the laser generator (3) to form a registration mark (18) in the sheet (2).

8. Apparatus according to claim 7, comprising a scanner (19), said scanner (19) being configured to read a registration mark (18) and send a signal indicative of the presence of a registration mark (18) to the control unit (12).

9. Apparatus according to claim 8, wherein the control unit (12) is configured to control the consumable forming unit (4) in dependence on said signal.

10. Apparatus according to any of claims 6 to 9, wherein the consumable forming unit (4) comprises a garniture to wrap the sheet formed into a rod-like shape in a wrapper to form a wrapped rod, and a cutter to cut the wrapped rod into discrete rod sections.

11. Apparatus according to claim 10, wherein the control unit (12) is configured to control the cutter that cuts the wrapped rod into discrete rod sections in dependence on said signal indicative of the presence of a registration mark (18).

12. A method of cutting a sheet of aerosol-generating material comprising:
conveying a sheet (2) of aerosol-generating material along a conveyance path (6),
making cuts in the sheet (2) using a laser emitted by a laser generator (3) as the sheet (2) is conveyed along the conveyance path (6),
the method being **characterised by**:
controlling the laser generator (3) with a control unit (12) to intermittently pre-cut the sheet (2) of aerosol-generating material to form discrete cut sections (15) spaced from each other in a direction extending along the conveyance path (6) and to additionally cut the sheet (2) to form continuous strips (13) from the discrete cut sections (15).

13. A method of manufacturing an aerosol-generating consumable from a sheet of aerosol-generating material, the method comprising:
applying a method of cutting a sheet (2) of aerosol-generating material according to claim 12, and
forming the cut sheet (2) into a consumable in a consumable forming unit (4).

## Patentansprüche

1. Vorrichtung zum Schneiden einer Bahn aus aerosolerzeugendem Material, umfassend:
einen Lasergenerator (3), der derart konfiguriert ist, dass ein von dem Lasergenerator (3) emittierter Laser die Bahn (2) schneidet, während die Bahn (2) aus aerosolerzeugendem Material entlang eines Förderwegs (6) gefördert wird;
wobei die Vorrichtung **gekennzeichnet ist durch**:
eine Steuereinheit (12), die konfiguriert ist, um den Lasergenerator (3) zu steuern, wobei die Steuereinheit (12) konfiguriert ist, um den Lasergenerator (3) zu steuern, um die Bahn (2) aus aerosolerzeugendem Material intermittierend vorzuschneiden, um diskrete geschnittene Abschnitte (15) zu formen, die in einer sich entlang des Förderwegs (6) erstreckenden Richtung voneinander beabstandet sind, und wobei die Steuereinheit (12) konfiguriert ist, um den Lasergenerator (3) zu steuern, um die Bahn (2) zusätzlich zu schneiden, um kontinuierliche Streifen (13) aus den diskreten geschnittenen Abschnitten (15) zu formen.

2. Vorrichtung nach Anspruch 1, wobei jeder diskrete geschnittene Abschnitt (15) eine Vielzahl von parallelen, länglichen Streifen (17) aus aerosolerzeugendem Material umfasst, die sich in einer Richtung entlang des Förderwegs (6) erstrecken.

3. Vorrichtung nach Anspruch 1 oder 2, wobei die Steuereinheit (12) konfiguriert ist, um den Lasergenerator (3) zu steuern, um eine Passermarke (18) in der Bahn (2) aus aerosolerzeugendem Material zu formen.

4. Vorrichtung zur Herstellung einer Bahn aus aerosolerzeugendem Material, umfassend eine Vorrichtung (3) zum Schneiden einer Bahn (2) aus aerosolerzeugendem Material nach einem der vorhergehenden Ansprüche.

5. Vorrichtung nach Anspruch 4, umfassend eine Herstellungseinheit für eine Bahn aus aerosolerzeugendem Material und eine Wickeleinheit zum Wickeln der hergestellten Bahn auf eine Spule (7), wobei die Vorrichtung (3) zum Schneiden einer Bahn (2) aus aerosolerzeugendem Material konfiguriert ist, um die Bahn (2) vor dem Wickeln der Bahn (2) auf eine Spule (7) unter Verwendung der Wickeleinheit zu schneiden.

6. Vorrichtung zur Herstellung eines aerosolerzeugenden Verbrauchsartikels aus einer Bahn aus aerosolerzeugendem Material, wobei die Vorrichtung umfasst:
eine Vorrichtung (3) zum Schneiden einer Bahn (2) aus aerosolerzeugendem Material nach einem der Ansprüche 1 bis 3;
einen Förderer, um die Bahn (2) aus aerosolerzeugendem Material entlang eines Förderwegs (6) zu fördern, und
eine Verbrauchsartikel-Formungseinheit (4), um die geschnittene Bahn (2) aus aerosolerzeugendem Material aufzunehmen, während sie entlang des Förderwegs (6) gefördert wird, und sie in eine stabähnliche Form zu formen.

7. Vorrichtung nach Anspruch 6, wobei die Steuereinheit (12) konfiguriert ist, um den Lasergenerator (3) zu steuern, um eine Passermarke (18) in der Bahn (2) zu formen.

8. Vorrichtung nach Anspruch 7, umfassend einen Scanner (19), wobei der Scanner (19) konfiguriert ist, um eine Passermarke (18) zu lesen und ein Signal, das das Vorhandensein einer Passermarke (18) angibt, an die Steuereinheit (12) zu senden.

9. Vorrichtung nach Anspruch 8, wobei die Steuereinheit (12) konfiguriert ist, um die Verbrauchsartikel-Formungseinheit (4) in Abhängigkeit von dem Signal zu steuern.

10. Vorrichtung nach einem der Ansprüche 6 bis 9, wobei die Verbrauchsartikel-Formungseinheit (4) ein Format, um die in eine stabähnliche Form gebrachte Bahn in eine Umhüllung einzuhüllen, um einen umhüllten Stab zu formen, und eine Schneidvorrichtung, um den umhüllten Stab in diskrete Stababschnitte zu schneiden, umfasst.

11. Vorrichtung nach Anspruch 10, wobei die Steuereinheit (12) konfiguriert ist, um die Schneidvorrichtung, die den umhüllten Stab in diskrete Stababschnitte schneidet, in Abhängigkeit von dem Signal zu steuern, das das Vorhandensein einer Passermarke (18) angibt.

12. Verfahren zum Schneiden einer Bahn aus aerosolerzeugendem Material, umfassend:
Fördern einer Bahn (2) aus aerosolerzeugendem Material entlang eines Förderwegs (6),
Durchführen von Schnitten in der Bahn (2) unter Verwendung eines von einem Lasergenerator (3) emittierten Lasers, während die Bahn (2) entlang des Förderwegs (6) gefördert wird,
wobei das Verfahren **gekennzeichnet ist durch**:
Steuern des Lasergenerators (3) mit einer Steuereinheit (12), um die Bahn (2) aus aerosolerzeugendem Material intermittierend vorzuschneiden, um diskrete geschnittene Abschnitte (15) zu formen, die in einer sich entlang des Förderwegs (6) erstreckenden Richtung voneinander beabstandet sind, und um die Bahn (2) zusätzlich zu schneiden, um kontinuierliche Streifen (13) aus den diskreten geschnittenen Abschnitten (15) zu formen.

13. Verfahren zur Herstellung eines aerosolerzeugenden Verbrauchsartikels aus einer Bahn aus aerosolerzeugendem Material, wobei das Verfahren umfasst:
Anwenden eines Verfahrens zum Schneiden einer Bahn (2) aus aerosolerzeugendem Material nach Anspruch 12, und
Bringen der geschnittenen Bahn (2) in einen Verbrauchsartikel in einer Verbrauchsartikel-Formungseinheit (4).

## Revendications

1. Appareil pour découper une feuille de matériau de génération d'aérosol comprenant :
un générateur laser (3) configuré de telle sorte qu'un laser émis par le générateur laser (3) découpe la feuille (2) tandis que la feuille (2) de matériau de génération d'aérosol est transportée le long d'un trajet de transport (6) ;
l'appareil étant **caractérisé par** :
une unité de commande (12) configurée pour commander le générateur laser (3), dans lequel l'unité de commande (12) est configurée pour commander au générateur laser (3) de prédécouper par intermittence la feuille (2) de matériau de génération d'aérosol pour former des sections découpées distinctes (15) espacées les unes des autres dans une direction s'étendant le long du trajet de transport (6), et dans lequel l'unité de commande (12) est configurée pour commander au générateur laser (3) de découper en outre la feuille (2) pour former des bandes continues (13) à partir des sections découpées distinctes (15).

2. Appareil selon la revendication 1, dans lequel chaque section découpée distincte (15) comprend une pluralité de bandes allongées parallèles (17) de matériau de génération d'aérosol s'étendant dans une direction le long du trajet de transport (6).

3. Appareil selon la revendication 1 ou 2, dans lequel l'unité de commande (12) est configurée pour commander au générateur laser (3) de former une marque d'enregistrement (18) dans la feuille (2) de matériau de génération d'aérosol.

4. Appareil de fabrication d'une feuille de matériau de génération d'aérosol comprenant un appareil (3) pour découper une feuille (2) de matériau de génération d'aérosol selon une quelconque revendication précédente.

5. Appareil selon la revendication 4, comprenant une unité de fabrication de feuille de matériau de génération d'aérosol et une unité d'enroulement pour enrouler la feuille fabriquée sur une bobine (7), l'appareil (3) pour découper une feuille (2) de matériau de génération d'aérosol étant configuré pour découper la feuille (2) avant l'enroulement de la feuille (2) sur une bobine (7) à l'aide de l'unité d'enroulement.

6. Appareil de fabrication d'un consommable de génération d'aérosol à partir d'une feuille de matériau de génération d'aérosol, l'appareil comprenant :
un appareil (3) pour découper une feuille (2) de matériau de génération d'aérosol selon l'une quelconque des revendications 1 à 3 ;
un transporteur pour transporter la feuille (2) de matériau de génération d'aérosol le long d'un trajet de transport (6), et
une unité de formage de consommable (4) pour recevoir la feuille découpée (2) de matériau de génération d'aérosol tandis qu'elle est transportée le long du trajet de transport (6) et la former en une forme de tige.

7. Appareil selon la revendication 6, dans lequel l'unité de commande (12) est configurée pour commander au générateur laser (3) de former une marque d'enregistrement (18) dans la feuille (2).

8. Appareil selon la revendication 7, comprenant un scanner (19), ledit scanner (19) étant configuré pour lire une marque d'enregistrement (18) et envoyer un signal indiquant la présence d'une marque d'enregistrement (18) à l'unité de commande (12).

9. Appareil selon la revendication 8, dans lequel l'unité de commande (12) est configurée pour commander l'unité de formage de consommable (4) en fonction dudit signal.

10. Appareil selon l'une quelconque des revendications 6 à 9, dans lequel l'unité de formage de consommable (4) comprend une garniture pour envelopper la feuille formée en forme de tige dans un emballage pour former une tige enveloppée, et un dispositif de découpe pour découper la tige enveloppée en sections de tige distinctes.

11. Appareil selon la revendication 10, dans lequel l'unité de commande (12) est configurée pour commander le dispositif de découpe qui découpe la tige enveloppée en sections de tige distinctes en fonction dudit signal indiquant la présence d'une marque d'enregistrement (18).

12. Procédé pour découper une feuille de matériau de génération d'aérosol comprenant :
le transport d'une feuille (2) de matériau de génération d'aérosol le long d'un trajet de transport (6),
la réalisation de découpes dans la feuille (2) à l'aide d'un laser émis par un générateur laser (3) tandis que la feuille (2) est transportée le long du trajet de transport (6),
le procédé étant **caractérisé par** :
la commande du générateur laser (3) à l'aide d'une unité de commande (12) pour prédécouper par intermittence la feuille (2) de matériau de génération d'aérosol pour former des sections découpées distinctes (15) espacées les unes des autres dans une direction s'étendant le long du trajet de transport (6), et pour découper en outre la feuille (2) pour former des bandes continues (13) à partir des sections découpées distinctes (15).

13. Procédé de fabrication d'un consommable de génération d'aérosol à partir d'une feuille de matériau de génération d'aérosol, le procédé comprenant :
l'application d'un procédé de découpe d'une feuille (2) de matériau de génération d'aérosol selon la revendication 12, et
le formage de la feuille découpée (2) en un consommable dans une unité de formage de consommable (4).
